# EUROPÄISCHE PATENTSCHRIFT

(11) **EP 2 942 242 B1**
(45) Veröffentlichungstag und Bekanntmachung des Hinweises auf die Patenterteilung: **23.11.2016**
(21) Anmeldenummer: 14167500.9
(22) Anmeldetag: 08.05.2014
(51) Int. Cl.: B60R 21/233, B60R 21/231, B60R 21/2338

(54) **Kopfairbagsystem für ein Fahrzeug und Fahrzeug mit einem Kopfairbagsystem**
Head airbag system for a vehicle and vehicle with a head airbag system
Système d'airbag de tête pour véhicule et véhicule doté de celui-ci

(43) Veröffentlichungstag der Anmeldung: 11.11.2015
(73) Patentinhaber: Automotive Safety Technologies GmbH, 85080 Gaimersheim (DE)
(72) Erfinder: Meißner, Norman, 85055 Ingolstadt (DE)
(74) Vertreter: Hofstetter, Schurack & Partner

(56) Entgegenhaltungen:
- EP-A2- 1 577 172
- WO-A1-97/06987
- DE-A1-102007 025 986
- US-A1- 2012 193 897

## Beschreibung

Die Erfindung betrifft ein Kopfairbagsystem für ein Fahrzeug und ein Fahrzeug mit einem Kopfairbagsystem der in den Oberbegriffen der unabhängigen Ansprüche angegebenen Art.

Gängige Kopfairbagsysteme weisen üblicherweise zwei miteinander verbundene, beispielsweise miteinender vernähte oder verwebte, Gewebelagen auf, welche einen mit Gas befüllbaren Gassack ausbilden. Derartige Gassäcke können eine oder mehrere Kammern aufweisen, welche bei einem Seitenaufprall eines Fahrzeugs mit Gas befüllt werden, wodurch eine Rückhaltewirkung bezüglich der Insassen in Fahrzeugquerrichtung und insbesondere ein Schutz eines Kopfbereichs der Fahrzeuginsassen erzielt wird.

Bei schrägen Frontallastfällen, also wenn ein Fahrzeug in einen derartigen Unfall verwickelt ist, dass die auf das Fahrzeug einwirkenden Kräfte sowohl eine Komponente in Fahrzeuglängsrichtung als auch in Fahrzeugquerrichtung aufweisen, kann es zu Situationen kommen, in welchen kein ausreichender Fahrzeuginsassenschutz erzielt werden kann. Zum einen kann es zu einem so genannten Durchtauchen kommen, bei welchem in einer zweiten Sitzreihe eines Fahrzeugs sitzende Fahrzeuginsassen zunächst aufgrund des schrägen Frontallastfalls nach schräg vorne beschleunigt und dann wiederum nach schräg hinten beschleunigt werden. Dabei kann es dazu kommen, dass die Fahrzeuginsassen zwischen den in eine Rückhalteposition entfalteten Gassack und eine Fahrzeugscheibe oder eine Türverkleidung gelangen, was Verletzungen des Fahrzeuginsassen nach sich ziehen kann. Des Weiteren kann es passieren, dass bei einem schrägen Frontallastfall ein Fahrer eines Fahrzeugs ebenfalls mit seinem Kopf und Oberkörper nach schräg vorne beschleunigt wird, wobei er mit seinem Kopf zwischen einem entfalteten Fahrerairbag und einem entfalteten Gassack eines derartigen Kopfairbagsystems hindurchtaucht und auf das Armaturenbrett aufschlägt.

Die DE 10 2009 005 900 A1 zeigt ein Kopfairbagsystem. Das Kopfairbagsystem umfasst einen Gassack und ein Fangband, das im befüllten Zustand des Gassacks zwischen zwei fahrzeugfesten Punkten gespannt ist, wodurch eine Verschiebung des Gassacks in Fahrzeugquerrichtung verhindert wird.

Die EP 1 577 172 A1 zeigt einen Kopfairbag mit einem Gassack und einem daran angeordneten Verbindungselement. Das Verbindungselement ist in Fahrzeughochrichtung kürzer als der Gassack ausgebildet, wodurch sich der Gassack beim Entfalten in Richtung des Fahrzeugsinnenraums wölbt.

Die WO 97/06987 A1 zeigt einen Kopfairbag mit einem Gassack und einem daran angeordneten Spanngurt. Der Spanngurt ist in Fahrzeughochrichtung kürzer als der Gassack, wodurch sich der Gassack beim Entfalten in Richtung des Fahrzeugsinnenraums wölbt.

Die DE 10 2007 025 986 A1 beschreibt einen Kopfairbag, gemäss Oberbegriff von Anspruch 1, dessen in Fahrzeuglängsrichtung gesehen vorderer Airbagabschnitt im befüllten Zustand des Kopfairbags stärker als ein hinterer Airbagabschnitt in den Fahrgastraum hineinragt, sodass der vordere Airbagabschnitt des Kopfairbags an einem befüllten Fahrerairbag seitlich anliegt. Dies wird mittels eines am Airbag angeordneten Abspannmittels erreicht.

Die US 2012/193897 A1 zeigt einen Kopfairbag mit einem Gassack, an dessen Ober- und Unterseite mehrere Spanngurte angebracht sind. Die Spanngurte sind in Fahrzeughochrichtung kürzer als der Gassack, wodurch sich der Gassack beim Entfalten in Richtung des Fahrzeugsinnenraums wölbt.

Die EP 1 291 248 A2 zeigt ein Kopfairbagsystem, mit einer ersten und einer zweiten Gewebelage, welche einen Gassack ausbildet. Der Gassack ist von zwei weiteren Gewebelagen umschlossen. Diese dienen dazu, jeweilige Einschnürungen des Gassacks abzudecken, durch welche einzelne Kammern des entfalteten und aufgeblasenen Gassacks voneinander getrennt sind.

Es ist die Aufgabe der vorliegenden Erfindung, ein Kopfairbagsystem für ein Fahrzeug sowie ein Fahrzeug mit einem Kopfairbagsystem bereitzustellen, mittels welchen ein verbesserter Insassenschutz, insbesondere bei schrägen Frontallastfällen, erzielt werden kann.

Diese Aufgabe wird durch ein Kopfairbagsystem sowie durch ein Fahrzeug mit einem Kopfairbagsystem mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Das erfindungsgemäße Kopfairbagsystem für ein Fahrzeug umfasst einen von einer Verstauposition in eine Rückhalteposition entfaltbaren Gassack, der zwei gegenüberliegende Endbereiche aufweist, die mittels eines an diesen befestigten Verbindungselements miteinander verbunden sind. Das erfindungsgemäße Kopfairbagsystem zeichnet sich dabei dadurch aus, dass die Endbereiche bezogen auf eine Hauptentfaltungsrichtung des Gassacks gegenüberliegend angeordnet sind, wobei das Verbindungselement derart ausgebildet und an den Endbereichen befestigt ist, dass in einer entfalteten Rückhalteposition des Gassacks der Abstand zwischen den Endbereichen bezogen auf die Hochrichtung des entfalteten Gassacks geringer als die Länge eines zwischen den Endbereichen verlaufenden Gassackbereichs ist.

Das Verbindungselement ist also ein Verkürzungselement, welches die Entfaltung des Gassacks bezüglich seiner Hauptentfaltungsrichtung, also bei einem Einsatz in einem Kraftwagen in Fahrzeughochrichtung, beschränkt. Unter Hauptentfaltungsrichtung ist dabei diejenige Richtung zu verstehen, in welche sich der Gassack am stärksten ausbreitet. Bei Kopfairbagsystemen ist der Gassack üblicherweise als eine Art Vorhang ausgebildet, der sich von seiner Verstauposition in einem Dachhimmelbereich des Kraftwagens im Wesentlichen in Fahrzeughochrichtung nach unten in den Fahrzeuginnenraum in eine Rückhalteposition entfaltet, sobald der Gassack mit einem Gas befüllt wird.

Aufgrund der erfindungsgemäßen Ausgestaltung und Anordnung des Verbindungselements am Gassack wölbt sich dieser bei seiner Entfaltung in die Rückhalteposition also in Fahrzeugquerrichtung. Neben der Wölbung des Gassacks, die aus der Befüllung des Gassacks mit dem Gas resultiert, biegt sich der in Fahrzeughochrichtung gesehen mittlere Teil des Gassacks bogenförmig in Richtung des Fahrzeuginnenraums.

Der Gassack entfaltet sich zunächst in seiner Hauptentfaltungsrichtung bis das an dem Gassack befestigte Verbindungselement vollständig entfaltet und somit gespannt ist. Sobald das Verbindungselement entfaltet ist, begrenzt es die weitere Entfaltung des Gassacks in Fahrzeughochrichtung - also in der Hauptentfaltungsrichtung des Gassacks - und der Gassack wölbt sich bei dessen weiterer Befüllung in Richtung des Fahrzeuginnenraums.

Bei dem erfindungsgemäßen Kopfairbagsystem wölbt sich der Gassack weiter in den Fahrzeuginnenraum als sich ein Gassack mit gleicher Geometrie ohne das Verbindungselement in den Fahrzeuginnenraum wölben würde. Somit kann also bei verringertem Volumen der Kammer oder der Kammern des Gassacks die gleiche Wölbung in einen Fahrzeuginnenraum wie mit einem Gassack ohne das Verbindungselement und größerem Kammervolumen erzielt werden.

Durch das Verbindungselement wird eine Art Abspanneffekt erzielt. Aufgrund der Wölbung des Mittelteils des Gassacks in den Fahrzeuginnenraum wird der in Fahrzeughochrichtung gesehen untere Endbereich entgegen der Wölbungsrichtung des Mittelteils des Gassacks abgespannt wird. Mit anderen Worten wird der Gassack durch das Verbindungselement - am stärksten in dem Bereich, in dem das Verbindungselement an dem Gassack angebracht ist - bei seiner Entfaltung in die Rückhalteposition in eine bogenartige Form gezwungen.

Durch die Wölbung des in die Rückhalteposition entfalteten Gassacks wird der Abstand zwischen dem entfalteten Gassack und einem Kopf oder auch Oberkörper eines Fahrzeuginsassen in Fahrzeugquerrichtung verringert, also auch der Beschleunigungsweg in Richtung des entfalteten Gassacks, und infolgedessen die Aufprallgeschwindigkeit des Fahrzeuginsassen auf den Gassack, verkleinert. Entsprechende auf den Fahrzeuginsassen einwirkende, aus Aufprall auf den Gassack resultierende Kräfte werden dadurch reduziert.

Des Weiteren ist es erfindungsgemäß vorgesehen, dass das Verbindungselement derart dimensioniert und an dem Gassack befestigt ist, dass der Abstand zwischen den Endbereichen des in die Rückhalteposition entfalteten Gassacks bezogen auf dessen Hochrichtung zwischen einem ersten und einem zweiten vorbestimmten Gassackabschnitt in Längsrichtung des Gassacks abnimmt, wobei sich das Verbindungselement entlang der Fahrzeuglängsrichtung zunehmend verjüngt. Mit anderen Worten ist das Verbindungselement derart dimensioniert und an dem Gassack befestigt, dass der Gassack sich in der entfalteten Rückhalteposition bezogen auf eine Fahrzeuglängsrichtung immer stärker in den Fahrzeuginnenraum hineinwölbt, je geringer der Abstand zwischen den Endbereichen des in die Rückhalteposition entfalteten Gassacks bezogen auf die Fahrzeughochrichtung ist. Insbesondere der eingangs beschriebene Fall, bei welchem ein Fahrer eines Kraftwagens bei einem schrägen Frontallastfall den Fahrerairbag verfehlt und auf ein Armaturbrett aufschlägt, kann dadurch vermieden werden. Das Verbindungselement und der Gassack können derart dimensioniert und aneinander befestigt sein, dass der in die Rückhalteposition entfaltete Gassack sich derart in den Fahrzeuginnenraum wölbt, dass sich zwischen entfaltetem Fahrerairbag und entfaltetem Gassack des Kopfairbagsystems keine Lücke mehr befindet, durch welche ein Fahrer des Kraftwagens mit seinem Kopf hindurchtauchen kann. Analog würde dies bei einer Anordnung des Gassacks im Beifahrerbereich gelten.

In vorteilhafter Ausgestaltung der Erfindung ist es vorgesehen, dass das Verbindungselement an derjenigen Seite des Gassacks angeordnet ist, welche bei bestimmungsgemäßer Anordnung des Kopfairbagsystems in einem Fahrzeug in der entfalteten Rückhalteposition von einer Fahrgastzelle des Fahrzeugs abgewandt ist. Dadurch wird sichergestellt, dass der Gassack sich in der entfalteten Rückhalteposition in den Fahrzeuginnenraum wölbt.

In weiterer vorteilhafter Ausgestaltung der Erfindung ist es vorgesehen, dass das Verbindungselement derart dimensioniert und an dem Gassack angeordnet ist, dass der Gassack bei bestimmungsgemäßer Anordnung des Kopfairbagsystems in einem Fahrzeug in der entfalteten Rückhalteposition an eine Türinnenverkleidung einer hinteren Fahrzeugtür des Fahrzeugs angelegt ist. Das Verbindungselement und der Gassack sind also derart dimensioniert, dass der Gassack sich so in den Fahrzeuginnenraum wölbt, dass der Gassack sich mit seinem in Fahrzeughochrichtung gesehenen unteren Endbereich an eine Türinnenverkleidung einer hinteren Fahrzeugtür des Fahrzeugs anlegt. Dadurch kann das eingangs beschriebene Durchtauchen eines in der zweiten Sitzreihe sitzenden Fahrzeuginsassen bei einem schrägen Frontallastfall vermieden werden. Durch das Verbindungselement wird der Gassack nämlich bei seiner Entfaltung derart gespannt, dass dieser sich an die Türinnenverkleidung einer betreffenden hinteren Fahrzeugtür des Fahrzeugs anlegt, wodurch ein in der zweiten Sitzreihe sitzender Fahrzeuginsasse bei einem schrägen Frontallastfall beim Zurückfedern nicht zwischen entfalteten Gassack und Fahrzeugtür gelangen kann.

In weiterer vorteilhafter Ausgestaltung der Erfindung ist es vorgesehen, dass das Verbindungselement aus demselben Material wie der Gassack ausgebildet ist. Üblicherweise werden Gassäcke von Kopfairbagsystemen aus mehreren Gewebelagen miteinander vernäht, sodass das Verbindungselement, wenn es aus demselben Material wie der Gassack ausgebildet ist, besonders einfach mit dem restlichen Gassack vernäht werden kann. Darüber hinaus wird dadurch, dass das Verbindungselement aus demselben Material wie der Gassack ausgebildet ist, sichergestellt, dass das Verbindungselement eine ausreichende Festigkeit aufweist, um die zuvor beschriebene Wölbung des Gassacks in den Fahrzeuginnenraum sicherzustellen, ohne dass das Verbindungselement bei den relativ großen Belastungen während des Entfaltungsvorgangs reißt. Alternativ kann das Verbindungselement auch aus einem anderen Material als der Gassack ausgebildet sein, solange das Verbindungselement derart ausgebildet ist, dass es den Belastungen während des Entfaltungsvorgangs des Gassacks standhält, um die eingangs beschriebene Abspannwirkung beziehungsweise Wölbung des Gassacks in den Fahrzeuginnenraum zu gewährleisten.

Eine weitere vorteilhafte Ausführungsform der Erfindung sieht vor, dass das Verbindungselement als bandförmiger Streifen ausgebildet ist. Je nach Geometrie des Fahrzeugs beziehungsweise des Fahrzeuginnenraums und der Geometrieverhältnisse zwischen Verbindungselement und Gassack kann das Verbindungselement dabei in Fahrzeughochrichtung gesehen vertikal, horizontal oder auch diagonal verlaufen. Darüber hinaus können auch mehrere Verbindungselemente an unterschiedlichen Stellen des Gassacks vorgesehen sein, um an diesen Stellen jeweils lokal eine Wölbung des Gassacks in den Fahrzeuginnenraumbereich zu ermöglichen.

Gemäß einer weiteren vorteilhaften Ausführungsform der Erfindung ist es vorgesehen, dass das Verbindungselement in Form einer vollflächigen, die Endbereiche verbindenden Abspannung ausgebildet ist. Beispielsweise kann das Verbindungselement derart dimensioniert und ausgebildet sein, dass es im entfalteten Zustand des Gassacks eine Seitenscheibe oder mehrere Seitenscheiben eines Fahrzeugs vollständig abdeckt. Die Rückhaltewirkung eines Fahrzeuginsassen wird durch die vollflächige Ausgestaltung des Verbindungselements zusätzlich unterstützt, sodass der Gassack selbst entsprechend bezüglich seines Gasvolumens geringer dimensioniert werden kann. Entsprechend für die Befüllung des Gassacks mit Gas notwendige Gasgeneratoren können dadurch kleiner dimensioniert werden, sodass das gesamte Kopfairbagsystem als solches kompakter ausgestaltet und einfacher im Fahrzeuginnenraum, üblicherweise im Bereich des Dachhimmels eines Fahrzeugs, verstaut werden kann. Beispielsweise kann der Gassack auch mehrere mit einem Gas befüllbare Kammern aufweisen, wobei das Kopfairbagsystem eine Steuereinrichtung umfasst, welche dazu ausgelegt ist, zumindest eine der Kammern des Gassacks verzögert mit dem Gas zu befüllen. Es kann vorgesehen sein, dass der Gassack einige Hauptkammern aufweist, welche vorrangig zum Schutz der Köpfe von Fahrzeuginsassen dienen. Des Weiteren kann es vorgesehen sein, dass der Gassack einige Nebenkammern aufweist, die für eine so genannte Roll-Over-Protection vorgesehen sind. Das heißt, diese Nebenkammern sollen insbesondere dafür sorgen, dass nicht angeschnallte Personen bei einem Überschlag des Fahrzeugs in diesem gehalten werden, indem diese Nebenkammern betreffende Fensterbereiche abdecken. Die Steuereinrichtung kann dabei derart ausgelegt sein, dass die Nebenkammern verzögert oder auch weniger stark mit Gas befüllt werden. Die Folge ist, dass entsprechende Gasgeneratoren zum Befüllen des Gassacks kleiner dimensioniert werden können. Im Zusammenhang mit der vollflächigen Ausbildung des Verbindungselements können sowohl die Hauptkammern als auch die Nebenkammern kleiner dimensioniert werden, wodurch ein entsprechender Gasgenerator besonders kompakt dimensioniert werden kann. Darüber hinaus wird durch eine derartige vollflächige Abspannung in einem relativ breiten Bereich des Gassacks - also in Fahrzeugslängsrichtung -die besagte Wölbung in den Fahrzeuginnenraum erzielt.

In weiterer vorteilhafter Ausgestaltung der Erfindung ist es vorgesehen, dass das Verbindungselement bezogen auf die Längsrichtung des Gassacks die gleiche Länge wie der Gassack aufweist. Mit anderen Worten ist das Verbindungselement derart dimensioniert, dass es sich bei entfaltetem Gassack in Fahrzeuglängsrichtung genauso weit erstreckt, wie der Gassack selbst. Dadurch wird die Unterstützung der Rückhaltewirkung des Kopfairbagsystems durch das Verbindungselement nochmals verbessert, sodass entsprechende Gasgeneratoren gegebenenfalls noch kleiner dimensioniert werden können. Darüber hinaus wird dadurch, dass das Verbindungselement bezogen auf die Längsrichtung des Gassacks die gleiche Länge wie der Gassack aufweist, im entfalteten Zustand des Gassacks durch das Verbindungselement verhindert, dass ein Fahrzeuginsasse, beispielsweise bei einem Überschlag, auch wenn dieser nicht angeschnallt sein sollte, aus einem Fahrzeugfenster des Fahrzeugs befördert wird.

In weiterer vorteilhafter Ausgestaltung der Erfindung ist es vorgesehen, dass das Verbindungselement bündig mit den jeweiligen Endbereichen des Gassacks abschließt. Mit anderen Worten ist das Verbindungselement derart an dem Gassack befestigt, dass keine Teile des Verbindungselements über die Endbereiche des Gassacks hinausragen. Dadurch muss zum einen besonders wenig Material für das Verbindungselement aufgewendet werden und zum anderen kann dadurch das Packmaß des Gassacks mitsamt dem Verbindungselement entsprechend klein gehalten werden, sodass der Bauraumbedarf für das Kopfairbagsystem insgesamt besonders gering gehalten werden kann.

Eine weitere vorteilhafte Ausführungsform der Erfindung sieht vor, dass der Gassack aus zwei Gewebelagen ausgebildet ist. Vorzugsweise sind die beiden Gewebelagen zu dem Gassack vernäht. Mit zwei Gewebelagen kann der Gassack auf besonders einfache Weise hergestellt werden.

Das erfindungsgemäße Fahrzeug umfasst das erfindungsgemäße Kopfairbagsystem oder eine vorteilhafte Ausführungsform des erfindungsgemäßen Kopfairbagsystems.

In vorteilhafter Ausgestaltung des erfindungsgemäßen Fahrzeugs ist es vorgesehen, dass das Fahrzeug ein Kraftwagen ist.

Eine weitere vorteilhafte Ausführungsform des erfindungsgemäßen Fahrzeugs sieht vor, dass das Verbindungselement derart dimensioniert und an einem Gassack befestigt ist, dass der Abstand zwischen den Endbereichen des in die Rückhalteposition entfalteten Gassacks bezogen auf dessen Hochrichtung von einer B-Säule des Fahrzeugs bis zum Spiegeldreieck des Fahrzeugs abnimmt. Mit anderen Worten nimmt die Länge des Verbindungselements in Fahrzeughochrichtung von der B-Säule bis zum Spiegeldreieck ab, sodass sich der Gassack in entfaltetem Zustand von der B-Säule bis zum Spiegeldreieck gesehen immer weiter in den Fahrzeuginnenraum hineinwölbt.

Vorzugsweise ist das Verbindungselement derart dimensioniert und an einem Gassack angeordnet, dass der Gassack in der entfalteten Rückhalteposition im Bereich eines Spiegeldreiecks des Fahrzeugs in Fahrzeugquerrichtung soweit in den Fahrzeuginnenraum des Fahrzeugs gewölbt ist, dass der Gassack einen ebenfalls in eine Rückhalteposition entfalteten Gassack eines Fahrer- oder Beifahrerairbags des Fahrzeugs berührt. Dadurch kann sichergestellt werden, dass bei einem schrägen Frontallastfall ein Fahrer oder ein Beifahrer nicht mehr zwischen dem entfalteten Gassack des Kopfairbags und einem Fahrer- beziehungsweise Beifahrerairbag hindurchtaucht.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: Eine schematische Darstellung eines mehrere Kammern aufweisenden, in eine Rückhalteposition entfalteten Gassack eines Kopfairbagsystems, an dessen oberem und unterem Endbereich ein Verbindungselement angeordnet ist, wodurch sich der Gassack in Fahrzeugquerrichtung bogenförmig wölbt;
- Fig. 2: eine schematische Darstellung des Gassacks und des Verbindungselements im zusammengefalteten Zustand;
- Fig. 3: eine Ansicht auf einen Fahrzeuginnenraum eines Kraftwagens, wobei ein in der zweiten Sitzreihe sitzender Fahrzeuginsasse schematisch dargestellt und der Gassack des Kopfairbagsystems in seine Rückhalteposition entfaltet ist;
- Fig. 4: eine Draufsicht auf einen Fahrer eines Kraftwagens, wobei der Gassack des Kopfairbagsystems sowie ein Fahrerairbag entfaltet sind; und
- Fig.5: eine schematische Darstellung des Gassacks und des Verbindungselements, welche jeweils separat dargestellt sind.

In den Figuren werden gleiche oder funktionsgleiche Elemente mit gleichen Bezugszeichen versehen.

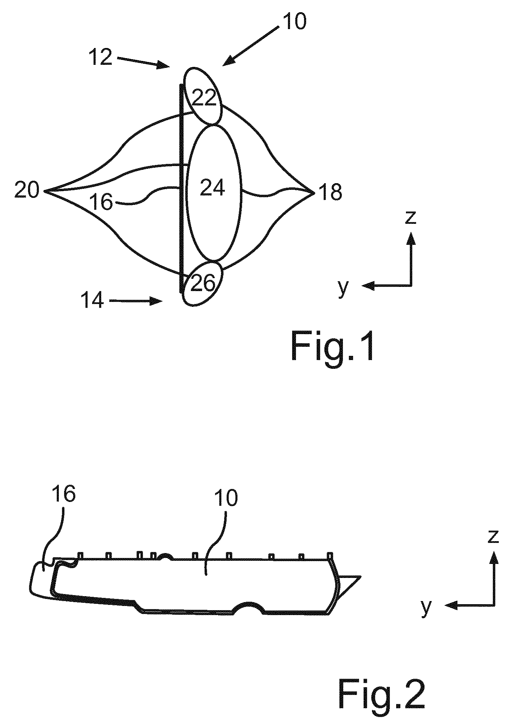

Ein in eine Rückhalteposition entfalteter Gassack 10 eines nicht näher bezeichneten Kopfairbagsystems für ein Fahrzeug ist in Fig. 1 gezeigt. Der Gassack ist vorliegend in einer Draufsicht auf die durch die Fahrzeughochrichtung z und die Fahrzeugquerrichtung y aufgespannte Ebene dargestellt. Die Fahrzeughochrichtung z stellt dabei im Wesentlichen die Hauptentfaltungsrichtung des Gassacks 10 dar. Der Gassack 10 weist zwei gegenüberliegende Endbereiche 12, 14 auf, die mittels eines an diesen befestigten Verbindungselements 16 miteinander verbunden sind.

Der Gassack 10 ist aus zwei Gewebelagen 18, 20 ausgebildet, die derart miteinander vernäht sind, dass drei separate Kammern 22, 24, 26 ausgebildet werden, welche vorliegend mit einem Gas befüllt sind.

Das Verbindungselement 16 ist derart ausgebildet und an den Endbereichen 12, 14 befestigt, dass in der hier gezeigten entfalteten Rückhalteposition des Gassacks 10 der Abstand zwischen den Endbereichen 12, 14 bezogen auf die Hochrichtung des entfalteten Gassacks, in der vorliegenden Darstellung also der Fahrzeughochrichtung z, geringer als die Länge eines zwischen den Endbereichen verlaufenden Gassackbereichs ist. Mit anderen Worten ist das Verbindungselement 16 in Fahrzeughochrichtung z kürzer ausgebildet als der Gassack 10, wenn an diesem das Verbindungselement 16 nicht angeordnet wäre und der Gassack 10 im Wesentlichen in Fahrzeughochrichtung z nach unten hängen würde.

Beim Entfalten des Gassacks 10 in die hier gezeigte Rückhalteposition wird das Verbindungselement 16 gespannt, wodurch sich der Gassack 10 nur in verkürzter Form in die Fahrzeughochrichtung Z entfaltet und sich, spätestens wenn das Verbindungselement 16 vollständig gespannt ist, in Fahrzeugquerrichtung Y in Richtung eines hier nicht gezeigten Fahrzeuginnenraums wölbt.

In Fig. 2 sind der Gassack 10 und das Verbindungselement 16 in ihrer zusammengefalteten Verstauposition dargestellt. In der vorliegenden Darstellung sind der in der Verstauposition angeordnete Gassack 10 und das ebenfalls in der Verstauposition angeordnete Verbindungselement, ebenfalls wie in Fig. 1, in der aus der Fahrzeughochrichtung z in der Fahrzeugquerrichtung y aufgespannten Ebene gezeigt. Vorliegend ist das Verbindungselement 16 aus demselben Material wie die beiden Gewebelagen 18, 20 des Gassacks 10 hergestellt. Das Verbindungselement 16 kann aber auch aus anderen Materialien hergestellt sein. Wesentlich ist dabei, dass das Verbindungselement 16 den Belastungen beim Entfalten des Gassacks 10 standhält und nicht durchreißt.

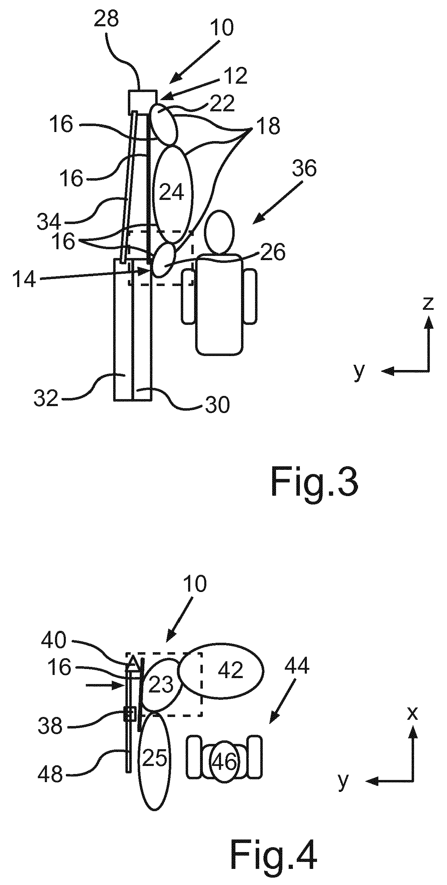

In Fig. 3 ist der in die Rückhalteposition entfaltete Gassack 10 dargestellt, wobei dieser vorliegend im Bereich einer zweiten Sitzreihe des Fahrzeuginnenraumbereichs eines Kraftwagens dargestellt ist. Der Gassack 10 hat sich mitsamt dem Verbindungselement 16 aus einem hier nicht näher bezeichneten Dachhimmelbereich des Kraftwagens aus einem Behälter 28 von einer Verstauposition in die hier gezeigte Rückhalteposition entfaltet. Durch die aufgrund des Verbindungselements 16 bewirkte Wölbung des Gassacks 10 ist der untere Endbereich 14 an eine Türverkleidung 30 einer Fahrzeugtür 32 angelegt. Darüber hinaus ist das Verbindungselement 16 als eine Art vollflächige Abspannung ausgebildet, welche ein Fenster 34 vollständig bedeckt.

Aufgrund des als Verkürzungselement dienenden Verbindungselements 16 wird der Gassack 10 also in Richtung der Türinnenverkleidung 30 derart abgespannt, dass der hier gezeigte Fahrzeuginsasse 36 auch bei einem Unfall mit einem schrägen Frontallastfall, also einer Abbremsung des Kraftwagens - also auch des Fahrzeuginsassen 36 - in Fahrzeuglängsrichtung x und Fahrzeugquerrichtung y nicht zwischen den entfalteten Gassack 10 und die Scheibe 34 oder die Türinnenverkleidung 30 gelangen kann.

In Fig. 4 ist ein Fahrzeuginnenraum eines Kraftwagens im Bereich eines Fahrersitzplatzes in einer Draufsicht gezeigt. Der Gassack 10 ist wiederum in seiner entfalteten Rückhalteposition gezeigt, wobei das Verbindungselement 16 derart dimensioniert und an dem Gassack 10 befestigt ist, dass der Abstand in Fahrzeughochrichtung z zwischen den hier nicht bezeichneten Endbereichen 12, 14 des in die Rückhalteposition entfalteten Gassacks 10 bezogen auf dessen Hochrichtung, also in Fahrzeughochrichtung z, von einer hier schematisch angedeuteten B-Säule 38 bis zu einem ebenfalls nur schematisch angedeuteten Spiegeldreieck 40 des Kraftwagens abnimmt. Mit anderen Worten nimmt die Länge des Verbindungselements 16 in Fahrzeughochrichtung z von der B-Säule 38 bis zum Spiegeldreieck 40 ab.

Des Weiteren ist das Verbindungselement 16 derart dimensioniert und an dem Gassack 10 angeordnet, dass der Gassack 10 in der hier gezeigten entfalteten Rückhalteposition im Bereich des Spiegeldreiecks 40 des Kraftwagens in Fahrzeugquerrichtung y soweit in den Fahrzeuginnenraum des Fahrzeugs gewölbt ist, dass der Gassack 10 einen ebenfalls in eine Rückhalteposition entfalteten Gassack 42 eines Fahrerairbags berührt.

Sollte es also zu einem Unfall mit einem schrägen Frontallastfall kommen, bei welchem ein Fahrer 44 sowohl in Fahrzeugquerrichtung y als auch in Fahrzeuglängsrichtung x nach vorne, also gemäß Fig. 4 nach schräg vorne links, beschleunigt wird, verhindert der in Fahrzeugquerrichtung y nach innen gewölbten Gassack 10, dass der Fahrer 44 mit seinem Kopf 46 zwischen den Gassack 42 des Fahrerairbags und den Gassack 10 des Kopfairbagsystems gelangen kann. Vorliegend ist das Verbindungselement 16 nur im Bereich zwischen der B-Säule 38 und dem Spiegeldreieck 40 angeordnet. Alternativ ist es aber auch möglich, dass sich das Verbindungselement 16 in Fahrzeuglängsrichtung x vollständig entlang einer vorderen Scheibe 48 erstreckt. Dadurch wird eine zusätzliche Rückhaltewirkung durch das Verbindungselement 16 erzielt, wobei durch eine vollflächige Abspannung der Scheibe 48 mittels des Verbindungselements 16 außerdem verhindert wird, dass der Fahrer 44 bei einem Überschlag des Kraftwagens, falls dieser nicht angeschnallt sein sollte, aus dem Fenster 48 befördert wird.

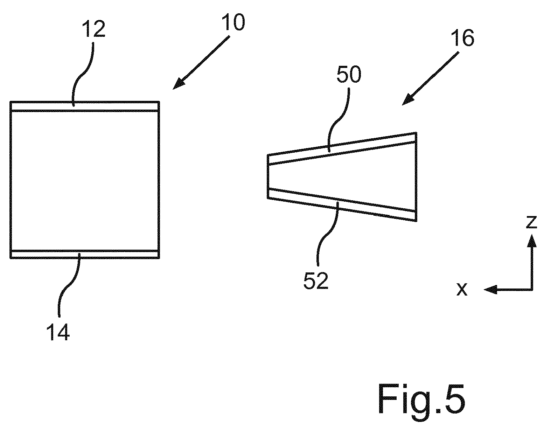

In Fig. 5 sind der Gassack 10 und das Verbindungselement 16 nochmals schematisch dargestellt, wobei diese vorliegend in der aus der Fahrzeughochrichtung z und der Fahrzeuglängsrichtung x aufgespannten Ebene gezeigt sind. Das Verbindungselement 16 kann beispielsweise mit entsprechenden Endbereichen 50, 52 bündig an den Endbereichen 12, 14 des Gassacks 10 befestigt werden. Beispielsweise ist es möglich, dass das Verbindungselement 16 an den Gassack 10 angenäht oder auch angeklebt ist.

Wie zu erkennen, verjüngt sich in der vorliegenden Darstellung das Verbindungselement 16 entlang der Fahrzeuglängsrichtung x zunehmend. Im miteinander verbundenen Zustand bewirkt das Verbindungselement 16 also, dass der Gassack 10 entlang der Längsrichtung x des Fahrzeugs immer stärker daran gehindert wird, sich beim Entfalten in Fahrzeughochrichtung z nach unten zu erstrecken. Die lokale Wölbung des Gassacks 10 in Richtung des Fahrzeuginnenraums fällt also umso stärker aus, je größer der jeweils lokale Längenunterschied zwischen dem Verbindungselement 16 und dem Gassack 10 in Fahrzeughochrichtung z ist.

Neben der in Fig. 5 gezeigten durchgängigen Ausgestaltung des Verbindungselements 16 können stattdessen auch mehrere bandförmige Verbindungselemente 16 an unterschiedlichen Stellen des Gassacks 10 angebracht werden, je nachdem, an welchen Stellen des Kraftwagens eine Wölbung des Gassacks 10 in den Fahrzeuginnenraum erwünscht ist. Des Weiteren können die Verbindungselemente 16 nach gewünschtem Ausmaß der Wölbung des Gassacks 10 entsprechend kürzer oder länger im Verhältnis zur Ausdehnung des Gassacks 10 in Fahrzeughochrichtung z ausgebildet sein.

## Patentansprüche

1. Kopfairbagsystem für ein Fahrzeug, mit einem von einer Verstauposition in eine Rückhalteposition entfaltbaren Gassack (10), der zwei gegenüberliegende Endbereiche (12, 14) aufweist, die mittels eines an diesen befestigten Verbindungselements (16) miteinander verbunden sind,
wobei
- die Endbereiche (12, 14) bezogen auf eine Hauptentfaltungsrichtung (z) des Gassacks (10) gegenüberliegend angeordnet sind;
- das Verbindungselement (16) derart ausgebildet und an den Endbereichen (12, 14) befestigt ist, dass in einer entfalteten Rückhalteposition des Gassacks (10) der Abstand zwischen den Endbereichen (12, 14) bezogen auf die Hochrichtung (Z) des entfalteten Gassacks (10) geringer als die Länge eines zwischen den Endbereichen verlaufenden Gassackbereichs ist;
**dadurch gekennzeichnet, dass**
das Verbindungselement (16) derart dimensioniert und an dem Gassack (10) befestigt ist, dass der Abstand zwischen den Endbereichen (12, 14) des in die Rückhalteposition entfalteten Gassacks (10) bezogen auf dessen Hochrichtung (Z) zwischen einem erstem und einem zweitem vorbestimmten Gassackabschnitt in Längsrichtung (X) des Gassacks (10) abnimmt, wobei sich das Verbindungselement (16) bezogen auf die durch die Fahrzeuglängsrichtung (x) und Fahrzeughochrichtung (y) aufgespannte Ebene entlang der Fahrzeuglängsrichtung (x) zunehmend verjüngt.

2. Kopfairbagsystem nach Anspruch 1,
**dadurch gekennzeichnet, dass**
das Verbindungselement (16) an derjenigen Seite des Gassacks (10) angeordnet ist, welche bei bestimmungsgemäßer Anordnung des Kopfairbagsystems in einem Fahrzeug in der entfalteten Rückhalteposition von einer Fahrgastzelle des Fahrzeugs abgewandt ist.

3. Kopfairbagsystem nach Anspruch 1 oder 2,
**dadurch gekennzeichnet, dass**
das Verbindungselement (16) derart dimensioniert und an dem Gassack (10) angeordnet ist, dass der Gassack (10) bei bestimmungsgemäßer Anordnung des Kopfairbagsystems in einem Fahrzeug in der entfalteten Rückhalteposition an eine Türinnenverkleidung (30) einer hinteren Fahrzeugtür (32) des Fahrzeugs angelegt ist.

4. Kopfairbagsystem nach einem der vorhergehenden Ansprüche,
**dadurch gekennzeichnet, dass**
das Verbindungselement (16) aus demselben Material wie der Gassack (10) ausgebildet ist.

5. Kopfairbagsystem nach einem der vorhergehenden Ansprüche,
**dadurch gekennzeichnet, dass**
das Verbindungselement (16) als bandförmiger Streifen ausgebildet ist.

6. Kopfairbagsystem nach einem der vorhergehenden Ansprüche,
**dadurch gekennzeichnet, dass**
das Verbindungselement (16) in Form einer vollflächigen, die Endbereiche (12, 14) verbindenden Abspannung ausgebildet ist.

7. Kopfairbagsystem nach Anspruch 6,
**dadurch gekennzeichnet, dass**
das Verbindungselement (16) bezogen auf die Längsrichtung (X) des Gassacks (10) die gleiche Länge wie der Gassack (10) aufweist.

8. Kopfairbagsystem nach einem der vorhergehenden Ansprüche,
**dadurch gekennzeichnet, dass**
das Verbindungselement (16) bündig mit den jeweiligen Endbereichen (12, 14) des Gassacks (10) abschließt.

9. Kopfairbagsystem nach einem der vorhergehenden Ansprüche,
**dadurch gekennzeichnet, dass**
der Gassack (10) aus zwei Gewebelagen (16, 18) ausgebildet ist.

10. Fahrzeug mit einem Kopfairbagsystem nach einem der vorhergehenden Ansprüche.

11. Fahrzeug nach Anspruch 10,
**dadurch gekennzeichnet, dass**
das Fahrzeug ein Kraftwagen ist.

12. Fahrzeug nach Anspruch 11,
**dadurch gekennzeichnet, dass**
das Verbindungselement (16) derart dimensioniert und an dem Gassack (10) befestigt ist, dass der Abstand zwischen den Endbereichen (12, 14) des in die Rückhalteposition entfalteten Gassacks bezogen auf dessen Hochrichtung (Z) von einer B-Säule (38) des Fahrzeugs bis zu einem Spiegeldreieck (40) des Fahrzeugs abnimmt.

13. Fahrzeug nach Anspruch 11 oder 12,
**dadurch gekennzeichnet, dass**
das Verbindungselement (16) derart dimensioniert und an dem Gassack (10) angeordnet ist, dass der Gassack (10) in der entfalteten Rückhalteposition im Bereich eines Spiegeldreiecks (40) des Fahrzeugs in Fahrzeugquerrichtung (Y) soweit in den Fahrzeuginnenraum des Fahrzeugs gewölbt ist, dass der Gassack (10) einen ebenfalls in eine Rückhalteposition entfalteten Gassack (42) eines Fahrer- oder Beifahrerairbags des Fahrzeugs berührt.

## Claims

1. Head airbag system for a vehicle including a gas bag (10) unfoldable from a stowed position into a restraining position, which has two facing end sections (12, 14), which are connected to each other by means of a connecting element (16) fastened to them, wherein
- the end sections (12, 14) are arranged opposite with respect to a main deployment direction (z) of the gas bag (10);
- the connecting element (16) is formed and fastened to the end sections (12, 14) such that the distance between the end sections (12, 14) with respect to the vertical direction (Z) of the deployed gas bag (10) is lower than the length of a gas bag area extending between the end sections in a deployed restraining position of the gas bag (10);
**characterized in that**
the connecting element (16) is dimensioned and fastened to the gas bag (10) such that the distance between the end sections (12, 14) of the gas bag (10) deployed into the restraining position with respect to the vertical direction (Z) thereof decreases between a first and a second predetermined gas bag section in longitudinal direction (X) of the gas bag (10), wherein the connecting element (16) relative to the plane formed by the vehicle longitudinal direction (x) and the vehicle vertical direction (y) increasingly tapers along the vehicle longitudinal direction (x).

2. Head airbag system according to claim 1,
**characterized in that**
the connecting element (16) is arranged on that side of the gas bag (10), which faces away from a passenger cabin of the vehicle in the deployed restraining position with intended arrangement of the head airbag system in a vehicle.

3. Head airbag system according to claim 1 or 2,
**characterized in that**
the connecting element (16) is dimensioned and arranged at the gas bag (10) such that the gas bag (10) is abutted on a door interior trim (30) of a rear vehicle door (32) of the vehicle in the deployed restraining position with intended arrangement of the head airbag system in a vehicle.

4. Head airbag system according to any one of the preceding claims, **characterized in that**
the connecting element (16) is formed of the same material as the gas bag (10).

5. Head airbag system according to any one of the preceding claims, **characterized in that**
the connecting element (16) is formed as a ribbon-shaped strip.

6. Head airbag system according to any one of the preceding claims, **characterized in that**
the connecting element (16) is formed in the form of a full-area bracing connecting the end sections (12, 14).

7. Head airbag system according to claim 6,
**characterized in that**
the connecting element (16) has the same length as the gas bag (10) with respect to the longitudinal direction (X) of the gas bag (10).

8. Head airbag system according to any one of the preceding claims, **characterized in that**
the connecting element (16) is flush with the respective end sections (12, 14) of the gas bag (10).

9. Head airbag system according to any one of the preceding claims, **characterized in that**
the gas bag (10) is formed of two fabric layers (16, 18).

10. Vehicle with a head airbag system according to any one of the preceding claims.

11. Vehicle according to claim 10,
**characterized in that**
the vehicle is an automobile.

12. Vehicle according to claim 11,
**characterized in that**
the connecting element (16) is dimensioned and fastened to the gas bag (10) such that the distance between the end sections (12, 14) of the gas bag deployed into the restraining position with respect to the vertical direction (Z) thereof decreases from a B pillar (38) of the vehicle to a mirror triangle (40) of the vehicle.

13. Vehicle according to claim 11 or 12,
**characterized in that**
the connecting element (16) is dimensioned and fastened to the gas bag (10) such that the gas bag (10) is curved into the vehicle interior of the vehicle in the deployed restraining position in the area of a mirror triangle (40) of the vehicle in vehicle transverse direction (Y) as far as the gas bag (10) contacts a gas bag (42) of a driver or passenger airbag of the vehicle also deployed into a restraining position.

## Revendications

1. Système d'airbag de tête pour un véhicule, avec un coussin à gaz (10) pouvant être déplié d'une position de rangement en une position de retenue, qui présente deux zones d'extrémité opposées (12, 14), qui sont reliées l'une à l'autre au moyen d'un élément de liaison (16), fixé à celles-ci,
- les zones d'extrémité (12, 14) étant agencées opposées par rapport à une direction de dépliage principale (z) du coussin à gaz (10) ;
- l'élément de liaison (16) étant constitué et fixé aux zones d'extrémité (12, 14) de telle sorte que, dans une position de retenue dépliée du coussin à gaz (10), l'espace entre les zones d'extrémité (12, 14) par rapport au sens ascendant (Z) du coussin à gaz (10) déplié est plus petit que la longueur d'une zone de coussin à gaz qui évolue entre les zones d'extrémité ;
**caractérisé en ce que**
l'élément de liaison (16) est dimensionné et fixé au coussin à gaz (10) de telle sorte que l'intervalle entre les zones d'extrémité (12, 14) du coussin à gaz (10) déplié dans la position de retenue par rapport à son sens ascendant (Z) diminue entre une première et une deuxième section prédéfinie du coussin à gaz, dans le sens longitudinal (X) du coussin à gaz (10), l'élément de liaison (16) s'amincissant de plus en plus le long du sens longitudinal du véhicule (x), par rapport au plan sous-tendu par le sens longitudinal du véhicule (x) et le sens ascendant du véhicule (y).

2. Système d'airbag de tête selon la revendication 1,
**caractérisé en ce que**
l'élément de liaison (16) est agencé sur le côté du coussin à gaz (10) qui est opposé à un habitacle du véhicule, dans un agencement adéquat du système d'airbag de tête dans un véhicule, dans la position de retenue dépliée.

3. Système d'airbag de tête selon la revendication 1 ou 2,
**caractérisé en ce que**
l'élément de liaison (16) est dimensionné et agencé sur le coussin à gaz (10) de telle sorte que le coussin à gaz (10) est appuyé contre un revêtement intérieur de porte (30) d'une porte arrière (32) du véhicule, dans un agencement adéquat du système d'airbag de tête dans un véhicule, dans la position de retenue dépliée.

4. Système d'airbag de tête selon l'une des revendications précédentes,
**caractérisé en ce que**
l'élément de liaison (16) est constitué à partir du même matériau que le coussin à gaz (10).

5. Système d'airbag de tête selon l'une des revendications précédentes,
**caractérisé en ce que**
l'élément de liaison (16) est constitué en tant que ruban en forme de bande.

6. Système d'airbag de tête selon l'une des revendications précédentes,
**caractérisé en ce que**
l'élément de liaison (16) est constitué en forme d'haubanage sur toute la surface qui relie les zones d'extrémité (12, 14).

7. Système d'airbag de tête selon la revendication 6,
**caractérisé en ce que**
l'élément de liaison (16) présente, par rapport au sens longitudinal (X) du coussin à gaz (10), la même longueur que le coussin à gaz (10).

8. Système d'airbag de tête selon l'une des revendications précédentes,
**caractérisé en ce que**
l'élément de liaison (16) affleure avec les zones d'extrémité (12, 14) respectives du coussin à gaz (10).

9. Système d'airbag de tête selon l'une des revendications précédentes,
**caractérisé en ce que**
le coussin à gaz (10) est constitué de deux couches de tissu (16, 18).

10. Véhicule avec un système d'airbag de tête selon l'une des revendications précédentes.

11. Véhicule selon la revendication 10,
**caractérisé en ce que**
le véhicule est une automobile.

12. Véhicule selon la revendication 11,
**caractérisé en ce que**
l'élément de liaison (16) est dimensionné et fixé au coussin à gaz (10) de telle sorte que l'intervalle entre les zones d'extrémité (12, 14) du coussin à gaz, déplié en position de retenue, diminue, par rapport à son sens ascendant (Z), depuis une colonne B (38) du véhicule jusqu'à un triangle de rétroviseur (40) du véhicule.

13. Véhicule selon la revendication 11 ou 12,
**caractérisé en ce que**
l'élément de liaison (16) est dimensionné et agencé sur le coussin à gaz (10) de telle sorte que le coussin à gaz (10) est cintré, dans la position de retenue dépliée, dans la zone d'un triangle de rétroviseur (40) du véhicule, dans le sens transversal du véhicule (Y), dans l'espace interne du véhicule, au point que le coussin à gaz (10) touche un coussin à gaz (42), également déplié dans une position de retenue, d'un airbag de conducteur ou de passager du véhicule.
